# EUROPÄISCHE PATENTANMELDUNG

(11) **EP 1 626 331 A2**
(43) Veröffentlichungstag der Anmeldung: **15.02.2006**
(21) Anmeldenummer: 05012835.4
(22) Anmeldetag: 15.06.2005
(51) Int. Cl.: G06F 3/033

(54) **Touch-Sensor Anordnung und Verwendung einer Touch-Sensor Anordnung**

(30) Priorität: 09.08.2004 DE 102004038752
(71) Anmelder: Carl Freudenberg KG, 69469 Weinheim (DE)
(72) Erfinder: Wöhlert, Manfred, 64658 Fürth (DE); Martini, Gert, 76344 Eggenstein (DE); Hoppner, Diether, 68309 Mannheim (DE)

(57) **Zusammenfassung**

Eine Touch-Sensor-Anordnung, umfassend ein Trägermaterial (5), dem eine Berührfläche (1) zugeordnet ist, wobei dem Trägermaterial (5) Elemente (4, 6) zugeordnet sind und wobei zumindest ein Teil der Elemente (4) bei Berührung der Berührfläche (1) und/ oder Annäherung an diese elektrische Signale erzeugt, ist im Hinblick auf die Aufgabe, eine Bedienbarkeit von Geräten mit dreidimensional strukturierten Bedienfeldern problemlos zu realisieren, dadurch gekennzeichnet, dass das Trägermaterial zusammen mit den Elementen flexibel verformbar ist. Die Touch-Sensor-Anordnung wird in Bedienfeldern von Weißer Ware, insbesondere in Bedienfeldern von Haushaltsgeräten, und in Bedienfeldern von Brauner Ware, insbesondere in Bedienfeldern von Ton- und Bildwiedergabegeräten, verwendet.

## Beschreibung

### Technisches Gebiet

Die Erfindung betrifft eine Touch-Sensor-Anordnung, umfassend ein Trägermaterial, dem eine Berührfläche zugeordnet ist, wobei dem Trägermaterial Elemente zugeordnet sind und wobei zumindest ein Teil der Elemente bei Berührung der Berührfläche und/ oder Annäherung an diese elektrische Signale erzeugt. Die Erfindung betrifft des Weiteren die Verwendung einer Touch-Sensor-Anordnung in Bedienfeldern von Weißer Ware, insbesondere in Bedienfeldern von Haushaltsgeräten. Schließlich betrifft die Erfindung die Verwendung einer Touch-Sensor-Anordnung in Bedienfeldern von Brauner Ware, insbesondere in Bedienfeldern von Ton- und Bildwiedergabegeräten.

### Stand der Technik

Aus dem Stand der Technik sind Sensoranordnungen bekannt, welche als offene Kondensatoren ausgestaltet sind. Dabei ist eine erste Kondensatorplatte auf einem Trägermaterial angeordnet und das Trägermaterial mit einem Körper verbunden, welcher als Dielektrikum dient. Bei einer solchen offenen Ausgestaltung der Touch-Sensor-Anordnung stellt der menschliche Finger die zweite Kondensatorplatte dar. Da der menschliche Körper eine eigene Kapazität aufweist, wird durch Berührung der Berührfläche oder Annäherung an die Berührfläche die kapazitive Charakteristik der Kondensatoranordnung geändert. Dies lässt sich in einer Elektronik auswerten.

Bekannt sind auch Touch-Sensoren, die aus Metall- oder Kunststofffederelementen bestehen, welche in der Regel so auf Leiterplatten oder vergleichbarem Trägermaterial angeordnet sind, dass sie an eine Blende eines Bedienfeldes federnd angepresst werden.

Bedienblenden moderner Haushaltsgeräte sind einerseits ebene Glas- oder Kunststoffflächen mit glatter oder rauher Oberfläche und andererseits komplex ausgestaltete dreidimensionale Strukturen. Diese Strukturen weisen vor dem Hintergrund eines ganz bestimmten Designs oftmals Krümmungen, angerauhte Strukturen, Winkel oder Wölbungen auf. Die Anordnung von konventionellen Touch-Sensoren ist bei Verwendung der bekannten Trägermaterialien, welche auf starren Leiterplatten basieren, aufwendig, da diese an die Strukturen der Bedienblenden durch Zuschneiden und stückweises Einpassen angepasst werden müssen.

Nachteilig bei den bekannten Touch-Sensor-Anordnungen ist auch ihre Bauhöhe und die Notwendigkeit, die Sensorelemente mechanisch mittels Federn oder dergl. an Bedienblenden anzudrücken. Bei Nutzung der bekannten Touch-Sensoren besteht auch die Gefahr, dass sich ein Feuchtigkeitsfilm zwischen Trägermaterial und Bedienblende bildet und sich die Touch-Sensor-Kondensatorplatte mit anderen Spannungspotentialen, z. B. Erdpotential, verbindet, so dass die Sensor-Wirkung (Kapazitätsänderung) nicht eintritt.

Insoweit weisen die bekannten Sensor-Anordnungen erhebliche Nachteile im Hinblick auf ihre Anwendbarkeit in elektrischen Geräten auf.

### Darstellung der Erfindung

Der Erfindung liegt daher die Aufgabe zugrunde, eine Touch-Sensor-Anordnung und Verwendungen der Touch-Sensor-Anordnungen der eingangs genannten Art derart auszugestalten und weiterzubilden, dass eine Bedienbarkeit von Geräten mit dreidimensional strukturierten Bedienfeldern problemlos realisierbar ist.

Erfindungsgemäß wird die voranstehende Aufgabe hinsichtlich einer Touch-Sensor-Anordnung mit den Merkmalen des Patentanspruchs 1 gelöst. Danach ist eine Touch-Sensor-Anordnung dadurch gekennzeichnet, dass das Trägermaterial zusammen mit den Elementen flexibel verformbar ist.

Erfindungsgemäß ist erkannt worden, dass durch diese Ausgestaltung das Trägermaterial zusammen mit den Elementen an komplex geformte dreidimensionale Strukturen anpassbar ist. Weiter ist erkannt worden, dass durch diese Ausgestaltung auf ein Zuschneiden starrer oder biegesteifer Leiterplatten und ein nachträgliches stückweises Einfügen derselben in die dreidimensionalen Strukturen, verzichtet werden kann.

Des Weiteren zeichnen sich die erfindungsgemäßen Touch-Sensor-Anordnungen durch geringe Bauhöhen aus, da auf mechanische Federanordnungen verzichtet werden kann. Vielmehr kann das Trägermaterial durch Selbsthaftung oder Klebung direkt an der Bedienblende angelegt werden, ohne dass die Gefahr eines in einem Zwischenraum auftretenden Feuchtigkeitsfilms besteht.

Folglich ist die eingangs genannte Aufgabe gelöst.

In ganz besonders vorteilhafter Weise könnte das Trägermaterial an dreidimensionale Strukturen anschmiegbar sein. Vor diesem Hintergrund könnte das Trägermaterial aus einem hochelastischen Material bestehen, welches sich ohne Bildung von Hohlräumen und Falten auch in Ecken oder Kanten plan an vorgegebene Strukturen anlegen lässt.

Das Trägermaterial könnte als Folie ausgebildet sein. Die Ausbildung als Folie erlaubt den Einsatz eines besonders dünnen Trägermaterials, welches im Hinblick auf seine Biegesteifigkeit äußerst günstige Eigenschaften aufweist. Darüber hinaus ist die Verwendung einer Folie als Bandmaterial im Hinblick auf einen kostengünstigen Fertigungsprozess besonders geeignet.

Vor diesem Hintergund ist auch die Ausbildung des Trägermaterials als mehrlagiges Folienpaket denkbar, wobei den einzelnen Folien elektrische Elemente zugeordnet sein könnten.

Das Trägermaterial könnte mit einem Isoliermaterial beschichtet oder durch Klebstoff mit diesem verbunden sein. Die Vorkehrung eines Isoliermaterials schützt die auf dem Trägermaterial aufgebrachten Elemente vor äußeren Einflüssen. Der Klebstoff kann die Elemente als Schutz einbetten und nur an der Oberfläche freigeben. Die Vorkehrung einer Beschichtung erlaubt die Auftragung eines besonders dünnen Isoliermaterials, welches die Verformbarkeit des Trägermaterials nicht beeinträchtigt. Die Vorkehrung eines Isoliermaterials, welches durch Klebstoff mit dem Trägermaterial verbunden ist, erlaubt eine besonders kostengünstige Fertigung.

Das Trägermaterial könnte thermoplastisch verformbar sein. Durch diese Materialeigenschaft des Trägermaterials ist realisierbar, ein ebenes Trägermaterial vor dem Einbau in eine dreidimensionale Struktur zu verformen. Dabei ist insbesondere denkbar, dass von dem dreidimensionalen Hohlraum, in welchen das Trägermaterial eingepasst werden soll, eine Negativform hergestellt wird, auf der das Trägermaterial solange thermoplastisch verformt wird, bis sich dieses an die Strukturen der Negativform anpasst. Durch die thermoplastische Verformbarkeit des Trägermaterials ist eine optimale Anpassungsfähigkeit des Trägermaterials an dreidimensionale Strukturen realisierbar.

Das Trägermaterial könnte aus einem Kunststoff bestehen. Dabei könnten Kunststoffe wie Polyester, Polyimid oder Polyetherimide Anwendung finden. Denkbar ist auch, dass feuerfeste Kunststoffe zum Einsatz kommen, welche gegen hohe Temperaturen resistent sind. Ganz in Abhängigkeit von den Anforderungen an das Trägermaterial ist ein geeigneter Kunststoff wählbar.

Vor diesem Hintergrund ist denkbar, dass das Trägermaterial durch einen Kleber, beispielsweise einen Acrylatkleber, mit den Flächen verbunden wird, an denen es angelegt werden soll. Dabei könnte ein Kalt- oder ein Heißkleber verwendet werden, je nach dem, welche Anforderungen an das Klebematerial gestellt werden. Dabei werden die Elemente eingebettet und nur an deren Oberflächen freigegeben, welche an einem Körper anliegen, dem die Berührfläche zugeordnet ist. Dies realisiert einen optimalen Schutz der Elemente.

Die Elemente, welche der Erzeugung oder Übertragung elektrischer Signale dienen, könnten auf das Trägermaterial aufgedruckt sein. Diese Ausgestaltung erlaubt eine Verwendung von Elementen, welche eine sehr geringe Dicke bzw. Höhe aufweisen und nahezu nicht vom Trägermaterial abragen. Des Weiteren ist durch einen Druckprozess realisiert, dass die Elemente derart mit dem Trägermaterial verbunden sind, dass sie zusammen mit diesem flexibel deformierbar sind.

Die Elemente könnten aus Silberleitpaste, Carbonpaste und anderen leitfähigen Pasten bestehen. Die Verwendung dieser Materialien ist besonders bei Druckprozessen günstig, da sie sich auf Grund ihrer rheologischen Eigenschaften sehr gut auf dem Trägermaterial verteilen lassen. Insbesondere ist es möglich, besonders feine Strukturen zu erzielen. Dabei ist insbesondere denkbar, dass Elektroden Gitter- oder Netzstrukturen aufweisen.

Die Elemente könnten aus geätzten Leiterbahnen bestehen. Hierdurch ist eine besonders feste Verbindung der Elemente mit dem Trägermaterial sichergestellt. Dabei könnten die Elemente aus Metallen, vorzugsweise Kupfer oder Aluminium bestehen. Diese Materialwahl realisiert eine bedonders gute Leitfähigkeit.

Die Elemente könnten Leiterbahnen und Elektroden umfassen. Dabei ist denkbar, dass die Leiterbahnen mit den Elektroden und einer Auswerteelektronik verbunden sind, welche die elektrisch erzeugten Signale der Elemente verarbeitet.

Die Elektroden könnten kreisförmig ausgebildet sein und von einer elektrisch oder magnetisch wirksamen ringartigen Struktur umgeben sein. Dabei ist denkbar, dass die Elektroden und die ringartige Struktur in einer Ebene oder versetzt zueinander angeordnet sind. Die Vorkehrung einer ringartigen Struktur, welche elektrisch oder magnetisch wirksam ist, erlaubt die Abschirmung der Elektroden vor ungewollten Einflüssen. Insoweit ist vorteilhaft realisiert, dass die Elektroden ausschließlich durch die Berührfläche zur Erzeugung eines Signals anregbar sind.

Die Elektroden könnten kreisförmig oder ringartig ausgebildet sein. Diese Ausgestaltung erlaubt in besonders einfacher Weise die Herstellung eines Kondensators, bei dem die Elektroden als Kondensatorplatten fungieren. Insoweit dienen die Elemente als kapazitive Elemente.

Im Hinblick auf eine kapazitive Ausgestaltung der Touch-Sensor-Anordnung könnte eine Elektrode als erste Kondensatorplatte und der menschliche Körper als zweite Kondensatorplatte fungieren. Der menschliche Körper weist eine eigene Kapazität auf, welche bei Berührung der Berührfläche oder Annäherung an diese die elektrische Charakteristik der kapazitiven Touch-Sensor-Anordnung beeinflusst. Diese Charakteristik ist durch eine Auswerte-Elektronik erfassbar. Insoweit sind Schaltprozesse allein durch Berühren der oder Annäherung an die Berührfläche durch den menschlichen Körper realisierbar.

Die Bedienblende eines elektrischen Gerätes, auf der die Berührfläche ausgebildet ist, könnte als Dielektrikum fungieren. Vor diesem Hintergrund ist denkbar, dass das Trägermaterial auf der Seite der Bedienblende angebracht wird, welche dem Bediener abgewandt ist. Die Vorkehrung einer Blende erlaubt eine Stabilisierung des Trägermaterials und einen Schutz desselben vor dem direkten Zugriff durch einen Bediener. Des Weiteren ist durch die Wahl der Dielektrizitätskonstanten des Dielektrikums die Ansprechwahrscheinlichkeit der Touch-Sensor-Anordnung steuerbar.

Die Bedienblende könnte eine komplex ausgeformte dreidimensionale Oberfläche aufweisen, auf der die Berührfläche ausgebildet ist. Diese Ausgestaltung erlaubt die Verwendung der Touch-Sensor-Anordnung in elektrischen Geräten, welche sich durch ein besonderes Design auszeichnen. Insoweit ist die Touch-Sensor-Anordnung nicht nur bei ebenen Bedienstrukturen, sondern auch bei komplex ausgeformten einsatzfähig und realisiert dreidimensional komplex ausgeformte Berührflächen.

An der Innenseite der Bedienblende könnte das Trägermaterial durch eine Klebeschicht hermetisch dicht angelegt sein. Dies verhindert die Bildung von Flüssigkeitsfilmen zwischen Trägermaterial und Bedienblende, insbesondere zwischen Elektroden und Bedienblende, was zu unerwünschten elektrischen Effekten führen kann.

Die Berührfläche könnte als Piktogramm ausgebildet sein. Diese Ausgestaltung realisiert eine einfache Kennzeichnungsmöglichkeit aktiver Bedienflächen auf einer Bedienblende.

Dem Trägermaterial könnte eine LED-Anzeige zugeordnet sein. Diese Ausgestaltung erlaubt eine sehr kurz beabstandete Anlage der Anzeige an der Bedienblende, so dass leuchtende Anzeigeelemente ohne erhebliche Lichtstreuung ablesbar sind. LEDs, welche mit dem Trägermaterial verbunden sind, liegen bei den bekannten Touch-Sensor-Anordnungen von der Bedienblende so weit entfernt, dass ihre Ablesbarkeit leidet.

Die LED-Anzeige könnte als 7-Segment-Anzeige ausgebildet sein. Hierdurch sind Zahlen auf einfache Weise darstellbar. Vor diesem Hintergrund ist denkbar, dass die LED-Anzeige als bei Berührung aktiver Schalter ausgebildet ist. Hierdurch kann ein Hoch- und Runterschalten diverser Einstellungen direkt auf der Anzeigezahl als solcher erfolgen. Im Sinne einer optisch besonders ansprechenden Ausgestaltung könnte die LED mit einem Nachtdesign oder Dekordruck versehen sein.

Des Weiteren ist die eingangs genannte Aufgabe im Hinblick auf eine Verwendung einer Touch-Sensor-Anordnung mit den Merkmalen des Patentanspruchs 23 gelöst. Danach findet eine erfindungsgemäße Touch-Sensor-Anordnung in Bedienfeldern von Weißer Ware, insbesondere in Bedienfeldern von Haushaltsgeräten, Verwendung. Erfindungsgemäß ist eine Bedienbarkeit dieser Geräte, welche häufig mit dreidimensional strukturierten Bedienfeldern ausgestattet sind, problemlos realisierbar.

Die Verwendung könnte in Kühlschränken, Herden, Kaffeemaschinen, Toastern, Mixern, Wäschetrocknern und Geschirrspülmaschinen erfolgen. Denkbar ist eine Verwendung bei sämtlichen Haushalts-Klein- und Großgeräten.

Schließlich ist die obige Aufgabe im Hinblick auf eine Verwendung einer Touch-Sensor-Anordnung mit den Merkmalen des Patentanspruchs 24 gelöst. Danach wird eine erfindungsgemäße Touch-Sensor-Anordnung in Bedienfeldern von Brauner Ware, insbesondere in Bedienfeldern von Ton- und Bildwiedergabegeräten, verwendet. Erfindungsgemäß ist eine Bedienbarkeit dieser Geräte, welche häufig mit dreidimensional strukturierten Bedienfeldern ausgestattet sind, problemlos realisierbar.

Bei den Tonwiedergabegeräten könnte es sich um Schallplattenspieler, CD-Spieler, Kassettenabspielgeräte, Tonbandgeräte, Fernseher, DVD-Player, Play-Stations, Handys oder Diktiergeräte handeln.

Bei den beschriebenen Verwendungen und Ausgestaltungen könnten Touch-Sensoren als Bedienorgane bei entsprechender Signalauswertung zu einem Bedienfeld aus mehreren Touch-Sensoren zusammengeschlossen werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Touch-Sensor-Anordnung anhand der Zeichnung zu verweisen. In Verbindung mit der Erläuterung des bevorzugten Ausführungsbeispiels anhand der Zeichnung, werden auch im allgemeinen bevorzugte Ausgestaltungen und Weiterbildungen der Lehre erläutert.

### Kurzbeschreibung der Zeichnung

In der Zeichnung zeigen
- Fig 1.: in einer schematischen Ansicht eine erfindungsgemäße Touch-Sensor-Anordnung und
- Fig 2.: in einer schematischen Ansicht eine erfindungsgemäße Touch-Sensor-Anordnung mit einer LED-Anzeige.

### Ausführung der Erfindung

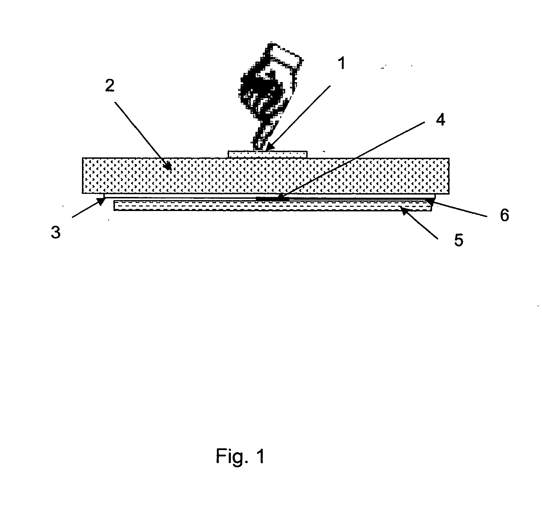

Fig. 1 zeigt eine Touch-Sensor-Anordnung mit einer Berührfläche 1, die auf einer Bedienblende 2 ausgebildet ist. An die Bedienblende 2 schließt sich eine Kleberschicht 3 an, die eine Elektrode 4 an der Bedienblende 2 derart festlegt, dass sie in direktem Kontakt zur Bedienblende 2 steht. Die Elektrode 4 ist einem Trägermaterial 5 zugeordnet. Des Weiteren ist dem Trägermaterial 5 eine Leiterbahn 6 zugeordnet. Das Trägermaterial 5 ist zusammen mit den Elementen 4, 6 flexibel verformbar.

Die Bedienblende 2 fungiert als Bedienfeld eines elektrischen Geräts. Das Bedienfeld weist eine dreidimensionale Oberfläche auf, wobei an deren Innenseite das Trägermaterial 5 angelegt ist. Die Leiterbahnen 6 sind mit den Elektroden 4 und einer nicht gezeigten Auswerteelektonik verbunden.

Die Bedienblende 2 dient als Dielektrikum, die Elektrode 4 als erste Kondensatorplatte und der menschliche Körper - hier schematisch als Hand gezeigt - als zweite Kondensatorplatte.

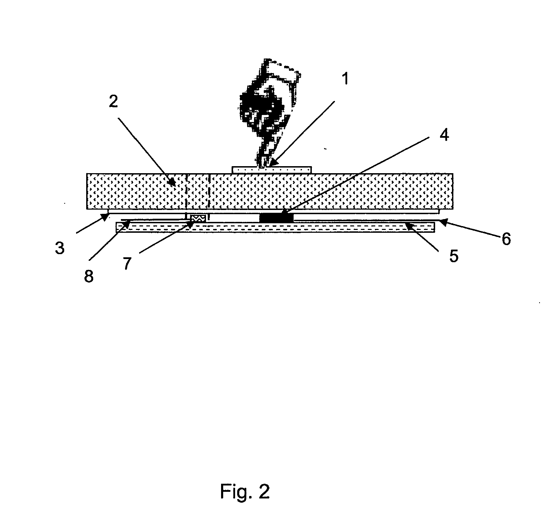

Fig. 2 zeigt eine Touch-Sensor-Anorndung, die im Wesentlichen den Aufbau der Anordnung gemäß Fig. 1 aufweist. Zusätzlich zu den Elementen 4, 6 ist dem Trägermaterial 5 eine LED-Anzeige 7 zugeordnet. Diese ist so eng an die Bedienblende 2 angelegt, dass deren Licht klar durch die Bedienblende erkennbar ist. Die LED-Anzeige ist mit einer Zuleitung 8 verbunden.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Touch-Sensor-Anordnung, umfassend ein Trägermaterial (5), dem eine Berührfläche (1) zugeordnet ist, wobei dem Trägermaterial (5) Elemente (4, 6) zugeordnet sind und wobei zumindest ein Teil der Elemente (4) bei Berührung der Berührfläche (1) und/ oder Annäherung an diese elektrische Signale erzeugt,
**dadurch gekennzeichnet, dass** das Trägermaterial (5) zusammen mit den Elementen (4, 6) flexibel verformbar ist.

2. Touch-Sensor-Anordnung nach Anspruch 1, **dadurch gekennzeichnet, dass** das Trägermaterial (5) an dreidimensionale Strukturen anschmiegbar ist.

3. Touch-Sensor-Anordnung nach Anspruch 1 oder 2, **dadurch gekennzeichnet, dass** das Trägermaterial (5) als Folie ausgebildet ist.

4. Touch-Sensor-Anordnung nach Anspruch 1 oder 2, **dadurch gekennzeichnet, dass** das Trägermaterial (5) als mehrlagiges Folienpaket ausgebildet ist.

5. Touch-Sensor-Anordnung nach einem der Ansprüche 1 bis 4, **dadurch gekennzeichnet, dass** das Trägermaterial (5) mit Isoliermaterial beschichtet oder durch Klebstoff mit diesem verbunden ist.

6. Touch-Sensor-Anordnung nach einem der Ansprüche 1 bis 5, **dadurch gekennzeichnet, dass** das Trägermaterial (5) thermoplastisch verformbar ist.

7. Touch-Sensor-Anordnung nach einem der Ansprüche 1 bis 6, **dadurch gekennzeichnet, dass** die Elemente (4, 6) auf das Trägermaterial (5) aufgedruckt sind.

8. Touch-Sensor-Anordnung nach einem der Ansprüche 1 bis 7, **dadurch gekennzeichnet, dass** die Elemente (4, 6) aus leitfähigen Pasten bestehen.

9. Touch-Sensor-Anordnung nach einem der Ansprüche 1 bis 7, **dadurch gekennzeichnet, dass** die Elemente (4, 6) als geätzte Strukturen ausgebildet sind.

10. Touch-Sensor-Anordnung nach einem der Ansprüche 1 bis 9, **dadurch gekennzeichnet, dass** die Elemente (4, 6) Leiterbahnen (6) und Elektroden (4) umfassen.

11. Touch-Sensor-Anordnung nach Anspruch 10, **dadurch gekennzeichnet, dass** die Leiterbahnen (6) mit den Elektroden (4) und einer Auswerteelektronik verbunden sind.

12. Touch-Sensor-Anordnung nach Anspruch 10 oder 11, **dadurch gekennzeichnet, dass** die Elektroden (4) kreisförmig ausgebildet sind und von einer elektrisch oder magnetisch wirksamen ringartigen Struktur umgeben sind.

13. Touch-Sensor-Anordnung nach einem der Ansprüche 10 bis 12, **dadurch gekennzeichnet, dass** die Elektroden (4) kreisförmig oder ringartig ausgebildet sind.

14. Touch-Sensor-Anordnung nach einem der Ansprüche 10 bis 13, **dadurch gekennzeichnet, dass** die Elektroden (4) als Kondensatorplatten ausgebildet sind.

15. Touch-Sensor-Anordnung nach Anspruch 14, **dadurch gekennzeichnet, dass** eine Elektrode (4) als erste Kondensatorplatte und der menschliche Körper, welcher die Berührfläche (1) berührt, als zweite Kondensatorplatte fungieren.

16. Touch-Sensor-Anordnung nach Anspruch 14 oder 15, **dadurch gekennzeichnet, dass** eine Bedienblende (2) eines elektrischen Geräts, auf der die Berührfläche (1) ausgebildet ist als Dielektrikum fungiert.

17. Touch-Sensor-Anordnung nach Anspruch 16, **dadurch gekennzeichnet, dass** die Berührfläche (1) auf einer Bedienblende (2) eines elektrischen Geräts ausgebildet ist, welche eine komplex ausgeformte dreidimensionale Oberfläche aufweist.

18. Touch-Sensor-Anordnung nach Anspruch 17, **dadurch gekennzeichnet, dass** an der Innenseite der Bedienblende (2) das Trägermaterial (5) durch eine Klebeschicht (3) hermetisch dicht angelegt ist.

19. Touch-Sensor-Anordnung nach einem der Ansprüche 1 bis 18, **dadurch gekennzeichnet, dass** die Berührfläche (1) als Piktogramm ausgebildet ist.

20. Touch-Sensor-Anordnung nach einem der Ansprüche 1 bis 19, **dadurch gekennzeichnet, dass** dem Trägermaterial (5) eine LED-Anzeige (7) zugeordnet ist.

21. Touch-Sensor-Anordnung nach Anspruch 20, **dadurch gekennzeichnet, dass** die LED-Anzeige (7) als 7-Segment-Anzeige ausgebildet ist.

22. Touch-Sensor-Anordnung nach Anspruch 20 oder 21, **dadurch gekennzeichnet, dass** die LED-Anzeige (7) als bei Berührung oder Annäherung aktiver Schalter ausgebildet ist.

23. Verwendung einer Touch-Sensor-Anordnung nach einem der vorhergehenden Ansprüche in Bedienfeldern von Weißer Ware, insbesondere in Bedienfeldern von Haushaltsgeräten.

24. Verwendung einer Touch-Sensor-Anordnung nach einem der Ansprüche 1 bis 22 in Bedienfeldern von Brauner Ware, insbesondere in Bedienfeldern von Ton- und Bildwiedergabegeräten.
